# EUROPÄISCHE PATENTANMELDUNG

(11) **EP 1 016 862 A1**
(43) Veröffentlichungstag der Anmeldung: **05.07.2000**
(21) Anmeldenummer: 98124761.2
(22) Anmeldetag: 28.12.1998
(51) Int. Cl.: G01N 21/64, G01B 11/06

(54) **Verfahren sowie Vorrichtung zur Qualitätsüberprüfung einer Beschichtung**

(71) Anmelder: SIEMENS AKTIENGESELLSCHAFT, 80333 München (DE)
(72) Erfinder: Döpper, Gebhard, 45473 Mulheim (DE)

(57) **Zusammenfassung**

Die Erfindung betrifft ein Verfahren zur Qualitätsüberprüfung einer Oberfläche (3), insbesondere einer Beschichtung (4) eines Erzeugnisses (1), wobei das Erzeugnis (1) mit ultraviolettem Licht beleuchtet wird, so daß Fehler (5) in der Beschichtung (4) sichtbar werden. Die Erfindung betrifft weiterhin eine Vorrichtung zur Qualtitätsüberprüfung einer Beschichtung (4) eines Erzeugnisses (1).

## Beschreibung

Die Erfindung betrifft ein Verfahren sowie eine Vorrichtung zur Qualitätsüberprüfung einer Beschichtung eines Erzeugnisses.

In dem Buch 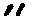 Plasma Spraying of Metallic and Ceramic Materials" von D. Matejka und B. Benko, John Willy and Sons, Chichester, U.K., 1989, werden verschiedene Anwendungen für die Herstellung von Beschichtungen mittels Plasmaspritzens beschrieben. Unter anderem werden in der Automobilindustrie bei der Herstellung von Verbrennungsmotoren auf Eisenlegierungen metalloxidische Beschichtungen auf Basis von Aluminiumoxid, Zirkonoxid aufgebracht, die beispielsweise mit Yt-triumoxid, Kalziumoxid oder Magnesiumoxid stabilisiert sind. Gemäß Kapitel 8 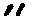 Testing of physical and mechanical properties of plasma sprayed coatings" sind verschiedene Verfahren zur Überprüfung von Eigenschaften der Beschichtung vorgesehen. Unter anderem ist hierbei eine visuelle Inspektion gegebenenfalls mit 6-facher Vergrößerung vorgesehen, für die Überprüfung der Beschichtung auf sichtbare Poren, Risse oder nicht beschichtete Gebiete.

In der WO 81/03704 A1 ist ein Verfahren zur Überprüfung der Oberflächenqualität von Festkörpern angegeben. Hierbei wird der Festkörper mit einem gepulsten Lichtstrahl, insbesondere einem Laserstrahl mit Licht im sichtbaren bereich bestrahlt. Diese Bestrahlung verursacht eine Erhöhung der Oberflächentemperatur des Festkörpers. Hierdurch entsteht eine gepulste Infrarot-Stahlung, welche mit entsprechenden Infrarotdetektoren aufgezeichnet wird. Durch eine unterschiedliche Temperaturabstrahlung des Festkörpers sind Oberflächenrisse sowie Eigenschaften verschiedener Beschichtungen erkennbar.

Aufgabe der Erfindung ist es ein Verfahren zur Qualitätsüberprüfung eines oberflächennahen Bereiches, insbesondere einer Beschichtung eines Erzeugnisses anzugeben. Eine weitere Aufgabe der Erfindung liegt darin, eine Vorrichtung zur Qualitätsüberprüfung einer Beschichtung eines Erzeugnisses anzugeben.

Erfindungsgemäß wird die auf ein Verfahren gerichtete Aufgabe dadurch gelöst, daß das Erzeugnis mit ultraviolettem Licht beleuchtet wird, so daß Fehler in dem oberflächennahen Bereich, insbesondere in der Beschichtung sichtbar gemacht werden.

Gegenüber einer rein visuellen Inspektion einer Oberfläche, insbesondere einer Beschichtung bei der Verwendung von Licht im sichtbaren Bereich treten bei einer Beleuchtung der Oberfläche (einer Beschichtung) mit ultraviolettem Licht Fehler in einem oberflächennahen Bereich, insbesondere in einer Beschichtung, die beispielsweise durch Unregelmäßigkeiten wie Fehlwachstumsstellen oder Einschlüssen hervorgerufen werden deutlich hervor. Hierdurch sind solche Fehler durch Beleuchtung mit ultraviolettem Licht leicht erkennbar. Es können hierdurch auch oberflächennahe Fehler von unbeschichteten Erzeugnissen, beispielsweise aus einem keramischen Material, sichtbar gemacht werden.

Vorzugsweise wird hierbei ultraviolettes Licht im nahen ultravioletten Bereich, sogenanntes Schwarzlicht verwendet. Der Wellenlängenbereich des verwendeten ultravioletten Lichtes liegt vorzugsweise zwischen 320 nm und 400 nm. Solches Licht läßt sich einfach durch sogenannte Schwarzlichtlampen herstellen. Hierbei können auch Lampen eingesetzt werden, die ultraviolette Strahlung erzeugen, beispielsweise Quecksilberdampflampen oder ähnliches. Es ist ebenfalls mölich ultraviolettes Licht bestimmter Wellenlängenbereiche durch entsprechende Filter aus Licht eines größeren Wellenlängenbereiches, beispielsweise normalem sichtbaren Licht, herauszufiltern.

Hierzu eignen sich Ultraviolett-Filter, die auch als Schwarzglasfilter bezeichnet werden, die das sichtbare Licht mit Ausnahme des roten Spektralbreiches absorbieren. Der Transmissionskoeffizient solcher Ultraviolett-Filter im Bereich zwischen 300 nm und 400 nm beträgt hierbei über 70 %; im Wellenlängenbereich zwischen 450 nm und 650 nm deutlich unter 20 %.

Es ist ebenfalls möglich auf die Oberfläche, insbesondere einer Beschichtung zusätzlich eine Fluoreszensschicht beinhaltend ein fluoreszierendes Material aufzubringen. Hierdurch treten entsprechende Fehler in der Beschichtung noch deutlicher hervor. Das Erzeugnis kann hierbei mit einem entsprechenden Material getränkt oder bestrichen werden, wodurch der Kontrast zunimmt und Fehlstellen in der Beschichtung, beispielsweise hervorgerufen durch Fehlwachstum oder Einschlüsse von Partikeln, wie beispielsweise bei einer abrasiven Bearbeitung der Beschichtung oder einer Vorbehandlung des Erzeugnisses vor Auftragen der Beschichtung entstehen können. Die Fehlstellen bzw. Einschlüsse können sowohl bei Verwendung einer Fluoreszensschicht oder auch ohne eine Fluoreszensschicht als helle bzw. weiße Flecken in der Beschichtung erscheinen.

Bevorzugtermaßen werden während und/oder nach der Beleuchtung mit ultraviolettem Licht optische Aufnahmen von dem Erzeugnis gemacht. Diese können beispielsweise unmittelbar als digitalisierte Bilder in einem Computer erstellt und abgespeichert werden, als Videoaufnahmen oder klassische Film- oder Fotoaufnahmen durchgeführt werden. Die Aufnahmen können hierbei gespeichert werden, in geeigneten Speichermedien oder unmittelbar durch ein geeignetes Ausgabemedium, wie beispielsweise einen Monitor oder einen Drucker dargestellt werden.

Vorzugsweise wird das Verfahren auf ein Erzeugnis angewandt, welches während seines bestimmungsgemäßen Einsatzes von einem heißen aggressiven Gas ausgesetzt ist. Das Erzeugnis kann hierzu eine als Wärmedämmschicht aufgebrachte Beschichtung aufweisen. Diese Beschichtung kann insbesondere auf einen metallischen Grundkörper des Erzeugnisses aufgebracht sein. Hierbei kann eine Anbindung der Wärmedämmschicht auf den metallischen Grundkörper unmittelbar erfolgen oder über eine sogenannte Haftvermittlerschicht, auf die sich zusätzlich ein Oxid, wie beispielsweise Aluminiumoxid oder Chormoxid gebildet hat, oder aufgetragen wurde.

Ein mit einem heißen Gas beaufschlagbares Bauteil ist hierbei vorzugsweise ein Bauteil einer thermischen Maschine, wie einer Gasturbine, einem Ofen oder ähnlichem. Als Bauteile einer Gasturbine sind insbesondere eine Turbinenlaufschaufel, eine Turbinenleitschaufel oder ein Hitzeschild einer Brennkammer zu nennen. Diese können einem heißen aggressiven Gas, welches bei Verbrennung von Erdgas, Kohlegas, Erdöl oder anderen Brennstoffen entsteht, bei Temperaturen von über 1000 °C ausgesetzt sein.

Eine Wärmedämmschicht für ein einem heißen Gas aussetzbaren Erzeugnis weist vorzugsweise eine Schichtdicke von über 50 µm, insbesonder über 200 µm auf. Die Wärmedämmschicht kann hierbei ein metallisches Oxid, wie Zirkonoxid, ein Spinell (MgAl₂O₄) oder ähnlich geeingete keramische Materialien umfassen. Eine Wärmedämmschicht umfassend Zirkonoxid ist vorzugsweise mit Yttriumoxid Y₂O₃ oder einem anderen Oxid der Seltenen Erden teil- oder vollstabilisiert.

Das Erzeugnis, welches einem heißen aggressiven Gas aussetzbar ist, weist vorzugsweise einen Grundkörper aus einer Legierung mit hohem Schmelzpunkt auf, insbesondere eine Nickel, Kobalt- oder Chrombasislegierung. Eine darauf aufgebrachte Haftvermittlerschicht ist vorzugsweise eine Legierung der Art MCrAlX, wobei Cr für Chrom, Al für Aluminium, M für ein Element oder mehrere Elemente aus der Gruppe umfassend Eisen, Kobalt und Nickel steht und X für Yttrium, ein Element oder mehrere Elemente der Gruppe III des Periodensystems einschließlich der Actiniden und Lanthaniden sowie beispielsweise für Rhenium steht. Die Haftvermittlerschicht kann alternativ auch ein Aluminid, z.B. ein Platin- oder Nickelaluminid sein.

Das Erzeugnis wird während der Durchführung des Verfahrens vorzugsweise um eine Rotationsachse rotiert und mit dem ultravioletten Licht beleuchtet. Die Beleuchtung kann hierbei kontinuierlich oder beispielsweise stroposkopisch erfolgen.

Die auf eine Vorrichtung zur Qualitätsüberprüfung eines oberflächennahen Bereiches, insbesondere einer Beschichtung eines Erzeugnisses gerichtete Aufgabe wird erfindungsgemäß durch eine solche Vorrichtung gelöst, die eine Halterung für das Erzeugnis und eine Lichtquelle für ultraviolettes Licht aufweist. Die Vorrichtung kann weiterhin eine Kamera zur Erstellung von optischen Aufnahmen des beleuchteten Erzeugnisses sowie eine Speichereinrichtung zur Speicherung der Aufnahmen aufweisen. Zusätzlich kann die Vorrichtung eine Steuereinrichtung zur Steuerung der Lichtquelle und/oder der Kamera aufweisen. Weiterhin kann die Vorrichtung über ein Ausgabemedium, beispielsweise einen Monitor oder einen Drucker verfügen, an dem die durch die Beleuchtung mit ultraviolettem Licht sichtbar gemachten Fehler, beispielsweise Fehlwachstumsstellen oder Einschlüsse optisch wiedergegeben werden.

Anhand der Zeichnung werden das Verfahren und die Vorrichtung zur Qualitätsüberprüfung einer Beschichtung anhand einiger Ausführungsbeispiele beispielhaft erläutert. Es zeigen hierbei teilweise schematisiert und nicht maßstabsgerecht
- FIG 1: eine Vorrichtung zur Qualtiätsprüfung einer Beschichtung mit einer perspektivischen Darstellung einer Turbinenschaufel
- FIG 2: einen Querschnitt durch eine Turbinenschaufel und
- FIG 3: einen Ausschnitt durch ein Wärmedämmschichtsystem der Turbinenschaufel gemäß FIG 2.

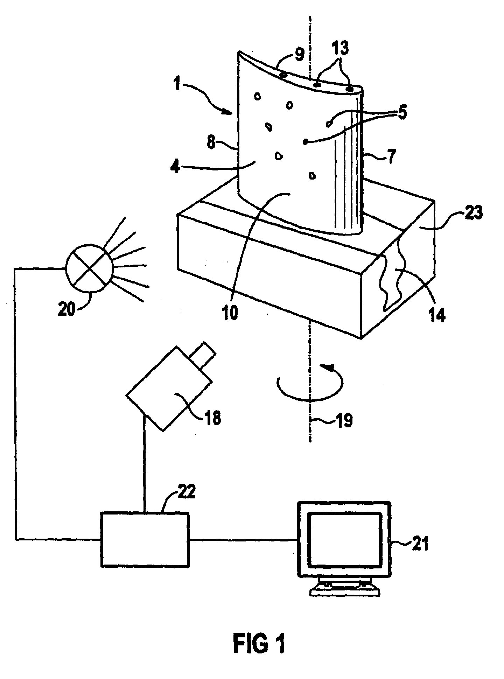

In FIG 1 ist in einer perspektivischen Ansicht eine Laufschaufel 1 einer Turbine, insbesondere einer Gasturbine dargestellt. Die Laufschaufel 1 erstreckt sich entlang einer Rotationsachse 19 von einem Schaufelfuß 14 zu einem Schaufelblattbereich 10. Mit dem Schaufelfuß 14 wird die Laufschaufel 1 normalerweise in eine nicht dargestellte drehbare Turbinenwelle befestigt. Gemäß FIG 1 ist die Laufschaufel 1 mit dem Schaufelfuß 14 in einer Halterung 23 befestigt, so daß sie um die Rotationsachse 19 drehbar ist. An den Schaufelfuß 14 schließt sich der eigentliche Schaufelblattbereich 10 an, welcher sich von einer Anströmkante 7 zu einer Abströmkante 8 über einerseits eine Druckseite 9 und anderseits eine Saugseite 10 erstreckt. Im eigentlichen Schaufelblattbereich 10 sind Kühlkanäle 13 zur Führung eines Kühlmediums, insbesondere Kühlluft vorgesehen. Der Schaufelblattbereich 10 weist eine Oberfläche 3 mit unterschiedlich gekrümmten Oberflächenbereichen auf. Die Oberfläche 3 eines metallischen Grundkörpers 2 ist mit einer Beschichtung 4, hier einer Wärmedämmschicht 4 versehen.

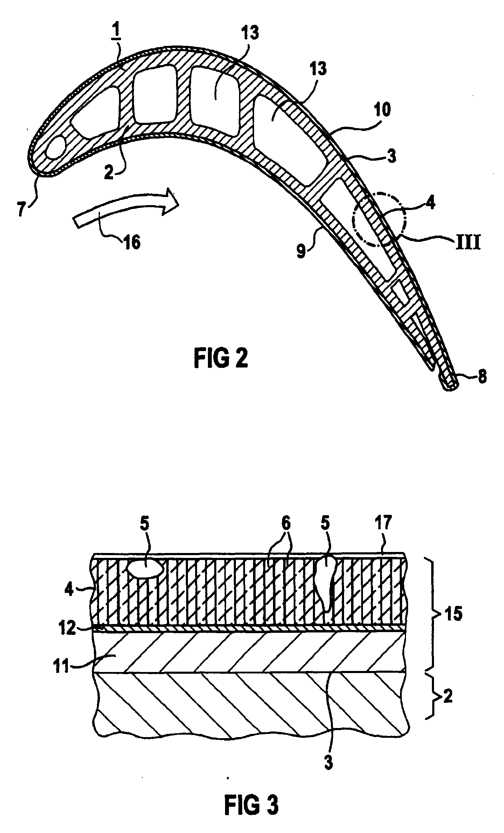

Die Vorrichtung umfaßt neben der Halterung 23 eine Lichtquelle 20, insbesondere eine Schwarzlichtquelle, durch die ultraviolette Strahlung im nahen Ultraviolettbereich erzeugt wird. Weiterhin ist eine Kamera 18, beispielsweise eine Videokamera vorgesehen, die mit einer Speicher- und Steuereinrichtung 22, beispielsweise einem Computer verbunden ist. Die Speicher- und Steuereinrichtung 22 ist mit einem Monitor 21 verbunden, auf dem die mit der Kamera 18 aufgenommenen Aufnahmen der Laufschaufel 1 dargestellt werden. Die Lichtquelle 20 ist ebenfalls mit der Speicher- und Steuereinrichtung 22 verbunden. Hierdurch ist eine Steuerung der Lichtquelle 20, beispielsweise für eine kontinuierliche oder einer getakteten (stroposkopischen) Erzeugung von ultraviolettem Licht erreichbar.
Bei Beleuchtung der Laufschaufel 1, d. h. der Wärmedämmschicht 4 mit dem ultravioletten Licht zeigen sich helle bzw. weiße Flecken 5 auf der Wärmedämmschicht 4, die beispielsweise durch Einschlüsse oder Fehlwachstumsstellen hervorgerufen werden (siehe FIG 3). Solche Einschlüsse an der Oberfläche der Wärmedämmschicht 4 können beispielsweise einen Durchmesser von 50 bis 100 µm aufweisen und durch Partikel gebildet werden, die beispielsweise für eine Bestrahlung zur Reinigung, Glättung oder Aktivierung der Oberfläche 4 des Grundkörpers 2 oder der Wärmedämmschicht 4 verwendet werden.

In FIG 2 ist ein Querschnitt durch ein Erzeugnis 1, hier einer Gasturbinenschaufel 1 dargestellt, die während eines bestimmungsgemäßen Einsatzes in einer nicht gezeigten Gasturbine von einem Heißgas 16 umströmt wird. Im Querschnitt erstreckt sich die Gasturbinenschaufel 1 von einer Anströmkante 7 über eine Druckseite 9 und eine Saugseit 10 zu einer Abströmkante 8. Die Gasturbinenschaufel 1 ist aus einem Grundkörper 2 gebildet, in dessen Inneren mehrere Kühlkanäle 13 zur Führung von Kühlluft vorgesehen sind. Die Oberfläche 3 der Gasturbinenschaufel 1 ist mit einer Wärmedämmschicht 4 beschichtet.

In FIG 3 ist schematisch der Aufbau eines Wärmedämmschichtsystems 15 dargestellt. Das Wärmedämmschichtsystem 15 ist auf dem Grundkörper 2 aufgebracht und weist unmittelbar an den Grundkörper 2 angrenzend eine Haftvermittlerschicht 11, daran angrenzend eine Oxidschicht 12 und auf der Oxidschicht 12 die eigentliche Wärmedämmschicht 4 auf. Die Haftvermittlerschicht 11 kann eine Legierung der Art MCrAlY oder MCrAlRe sein. Die Oxidschicht 12 kann im wesentlichen aus einem Aluminiumoxid bestehen oder alternativ oder zusätzlich weitere Metalloxide wie Chromoxid oder Galliumoxid aufweisen. Die Wahl der Haftvermittlerschicht 11 sowie der Oxidschicht 12 richtet sich bevorzugt nach dem Material des Grundkörpers 2 sowie der aufzubringenden Wärmedämmschicht 4. Die Wärmedämmschicht 4 kann beispielsweise aus teilstabilisiertem Zirkonoxid bestehen. Die Wärmedämmschicht 4 ist vorzugsweise in einer Feinstruktur aufgebracht, so daß sich Keramikstengel 6 im wesentlichen senkrecht zur Oberfläche 3 des Grundkörpers 2 gebildet haben.

Bei einem Fehlwachstum der Wärmedämmschicht 4 können sich Fehlstellen 5 bilden, die im wesentlichen nicht wie ein Keramikstengel ausgeführt sind sondern gegenüber Keramikstengeln 6 ein größeres Querschnitts- zu Längenverhältnis aufweisen. Solche auch als Blumen (Cornell) bezeichnete Fehlwachstumsstellen haben eine andere Dichte als die sie umgebenden Keramikstellen 6, was durch Bestrahlung mit ultraviolettem Licht sichtbar gemacht wird. Weiterhin ist beispielhaft in FIG 3 ein anderer Fehler 5 der Wärmedämmschicht 4 dargestellt, welche durch Einschluß eines Partikels in die Wärmedämmschicht 4 entstanden ist. Ein solcher Partikel kann beispielsweise durch eine Bestrahlung des Grundkörpers 2 oder nachfolgender Beschichtungen 11, 12 mit abrasiven Partikelstrahlen entstehen. Ein solcher Fehler 5 weist ebenfalls eine andere Dichte als die ihn umgebenden Keramikstengel 6 auf, was wiederum durch die Beleuchtung mit ultraviolettem Licht sichtbar gemacht wird.

Die Wärmedämmschicht 4 ist zur Verstärkung des Sichtbarmachungseffektes mit einer Fluoreszensschicht 17 versehen, die ein fluoreszierendes Material aufweist, beispielsweise ein Perylen-Abkömmling, Naftalimid, sogenannte optische Aufheller (Weißtöner) oder anderer fluoreszierender Materialien.

Die Erfindung zeichnet sich dadurch aus, daß mit Hilfe des Beleuchtens von, inbesondere keramischen Beschichtungen bzw. allgemein von Bauteiloberflächen, mittels ultraviolettem Licht (Schwarzlicht) Unregelmäßigkeiten, wie Fehlwachstumsstellen, Einschlüsse usw. sichtbar gemacht werden. Hierdurch wird eine zerstörungsfreie und effiziente Methode zur Verbesserung der Qualitätskontrolle von Beschichtungen oder Bauteiloberflächen erzielt. Diese Methode kann in Kombination mit Kameras auch automatisiert betrieben werden.

## Patentansprüche

1. Verfahren zur Qualitätsüberprüfung eines oberflächennahen Bereiches, insbesondere einer Beschichtung (4) eines Erzeugnisses (1), wobei das Erzeugnis (1) mit ultraviolettem Licht beleuchtet wird, so daß Fehler (5) in dem oberflächennahen Bereich, insbesondere der Beschichtung (4), sichtbar werden.

2. Verfahren nach Anspruch 1, wobei ultraviolettes Licht im Wellenlängenbereich zwischen 320 nm und 400 nm verwendet wird.

3. Verfahren nach Anspruch 1 und 2, bei dem auf die Oberfläche (3) eines Grundkörpers (2) oder einer Beschichtung (4) ein Fluoreszensschicht (17) beinhaltend ein fluoreszierendes Material aufgebracht wird.

4. Verfahren nach einem der vorhergehenden Ansprüche,
bei dem optische Aufnahmen des Erzeugnisses (1), insbesondere über eine Kamera (18), während und/oder nach der Beleuchtung gemacht werden.

5. Verfahren nach Anspruch 4, bei dem die optischen Aufnahmen gespeichert werden.

6. Verfahren nach einem der vorhergehenden Ansprüche, welches an einem, einem heißen aggressiven Gas (16) aussetzbaren Erzeugnis (1) angewendet wird, wobei das Erzeugnis (1) einen metallischen Grundkörper (2) mit einer als Wärmedämmschicht aufgebrachten Beschichtung (4) aufweist.

7. Verfahren nach Anspruch 6, wobei die Wärmedämmschicht (4) eine Schichtdicke größer 50 µm, insbesondere größer 200 µm, aufweist.

8. Verfahren nach einem der vorhergehenden Ansprüche, bei dem eine als Wärmedämmschicht dienende Beschichtung (4) Zirkonoxid (ZrO₂) umfaßt.

9. Verfahren nach Anspruch 8, wobei die Wärmedämmschicht (4) mit Yttriumoxid Y₂O₃ oder einem anderen Oxid der Seltenen Erden teil- oder vollstabilisiert ist.

10. Verfahren nach einem der vorhergehenden Ansprüche, welches auf ein Erzeugnis (1) angewandt wird, das ein Bauteil einer thermischen Maschine, insbesondere einer Gasturbine, ist.

11. Verfahren nach Anspruch 10, wobei als Erzeugnis (1) eine Turbinenlaufschaufel, eine Turbinenleitschaufel oder ein Hitzeschild einer Brennkammer verwendet wird.

12. Verfahren nach einem der vorhergehenden Ansprüche, wobei das Erzeugnis (1) um eine Rotationsachse (19) rotiert und kontinuierlich mit dem ultravioletten Licht beleuchtet wird.

13. Vorrichtung zur Qualitätsüberprüfung eines oberflächennahen Bereiches, insbesondere einer Beschichtung (4) eines Erzeugnisses (1) mit einer Halterung (23) für das Erzeugnis (1) und mit einer Lichtquelle (20) für ultraviolettes Licht.
